# EUROPEAN PATENT APPLICATION

(11) **EP 0 893 763 A1**
(43) Date of publication of application: **27.01.1999**
(21) Application number: 98305303.4
(22) Date of filing: 03.07.1998
(51) Int. Cl.: G06F 11/08, G06F 11/00, G06F 12/14

(54) **Integrity verification and authentication of copies of computer data**

(30) Priority: 25.07.1997 GB 9715684
(71) Applicant: Computer Forensics Limited, Worthing, West Sussex BN11 1NZ (GB)
(72) Inventor: Bates, Terence James, Worthing, West Sussex, BN11 1NZ (GB)
(74) Representative: Carmichael, David Andrew Halliday

(57) **Abstract**

A system for verifying and authenticating the integrity of data copied from computer memories, particularly in the field of computer forensics. Data from the memories of a computer (1) is copied to a data storage medium such as an optical cartridge (102) in a data collection system (100). The data is stored in blocks, with hash values been generated for the blocks of copied data. Hash values are also generated for reference data. These hash values are encrypted and further hash values are also generated for these encrypted values. The hash values can then be stored on, for example, a floppy disk. If the copied data is tampered with in any way, then the hash values will also alter, and by checking these hash values against those stored on the floppy disk, evidence of tampering can be established.

## Description

This invention relates to a means of verifying and authenticating the integrity of copies of computer data, particularly, although not exclusively, in the field of computer forensics.

Computers may be associated with almost any crime - from theft and fraud to murder, and having access to the information stored within the computer, for example, on the hard disk, may prove crucial to the success of any criminal investigation. A known way of examining the data stored in a computer is to copy the entire contents of the computer hard disk, and then examine and analyse the contents of the copy. However, it is important that this copied information does not affect or corrupt the original machine in any way, and most importantly, the copy - which may later be used as evidence in a court of law - must be protected from either accidental or deliberate modification, and that the investigating authority must be able to show that no such modification has taken place.

One way of satisfying these criteria, is for two copies of the data to be taken, one of which is sealed and placed in secure storage. The second copy is the copy that will be subject to forensic analysis. If a question arises as to the authenticity of the second copy i.e. that it has been tampered with or altered in any way, then the second copy can be compared with the first, sealed, copy to determine whether the allegations are true. This of course assumes that the first copy itself cannot be tampered with because it is in secure storage.

A problem with this particular method of integrity verification and authentication, is the fact that, with the increasing size of hard disks - 2 Gbytes is not unusual, and the fact that many computers may have more than one hard disk, making the two copies of all the information can take some time to complete.

According to the present invention there is provided a system for copying data from a computer comprising a processing means and at least one memory means associated therewith, the system comprising memory means for storing the copied data thereon, means for copying the data to the system memory means in sequences of data blocks, means for generating a numerical value for each block of data to be stored in the system memory means, the value being dependant upon, and substantially unique to, the block of data, such that any bit change in the stored data would result in a different numerical value, and means for storing each generated numerical value in a portion of the system memory means. There is also provided a method of copying data from a computer comprising a processing means and at least one memory means associated therewith, the method comprising the steps of copying the data to system memory means in sequences of data blocks, generating a numerical value for each copied block of data the value being dependant upon, and substantially unique to, the block of data, such that any bit change in the stored data would result in a different numerical value, storing the copied data in a system memory means, and storing each generated numerical value in a portion of the system memory means. These numerical values may be 128-bit hash values which can be stored on a floppy disk. If any change in these hash values is found, this indicates that the data has been tampered with, by finding out which hash values have been changed, and in indication of what data has been tampered can also be given. These hash values can also be encrypted for further security, and reference data can also be stored. Hash values can also be generated for this reference data.

The system therefore has the advantage of providing an integrity verification and authentication system in which only one copy of the computer data need be taken, which means significantly less time taken in the copying process. At the same time the security of the system is maintained. It is also simpler and cheaper to use.

A system is provided with two distinct security processes without the need for time consuming extra copies to be made. Various hash values are generated which can be calculated from existing data on the cartridge and matched with integrity verification and authentication data generated during the security process and which is stored either on the cartridges or on floppy disks. By encrypting the integrity verification and authentication data and a password only a holder of the private key used in the encryption process is able to confirm the internal integrity of the cartridges used to copy the data. Thus, even in the event that the floppy disks used to store the integrity verification and authentication data are lost or corrupted, their integrity can still be proven.

The invention will now be described, by way of example only, with reference to the accompanying drawings, of which:

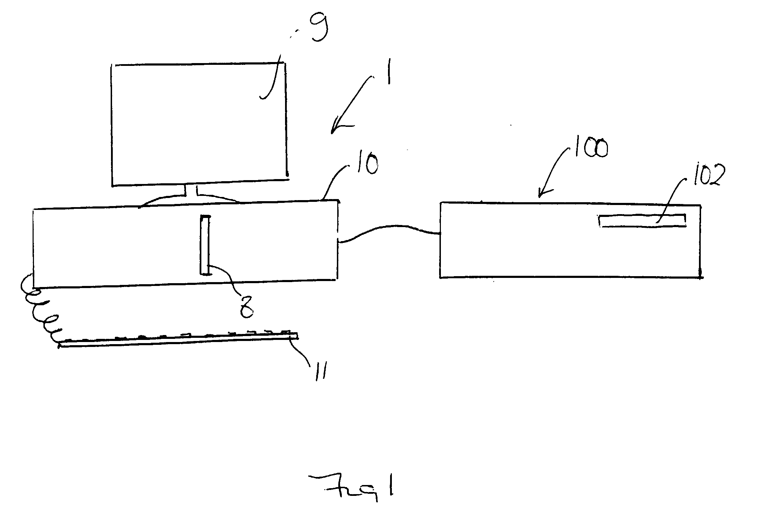

Figure 1 is a schematic representation of a data collection system coupled to a personal computer;

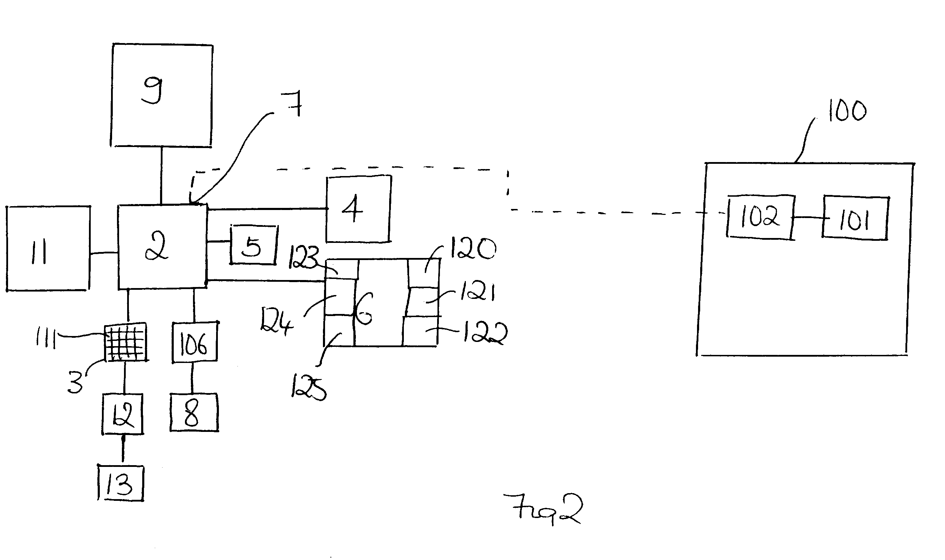

Figure 2 is a schematic block diagram of the data collection system and personal computer of Figure 1;

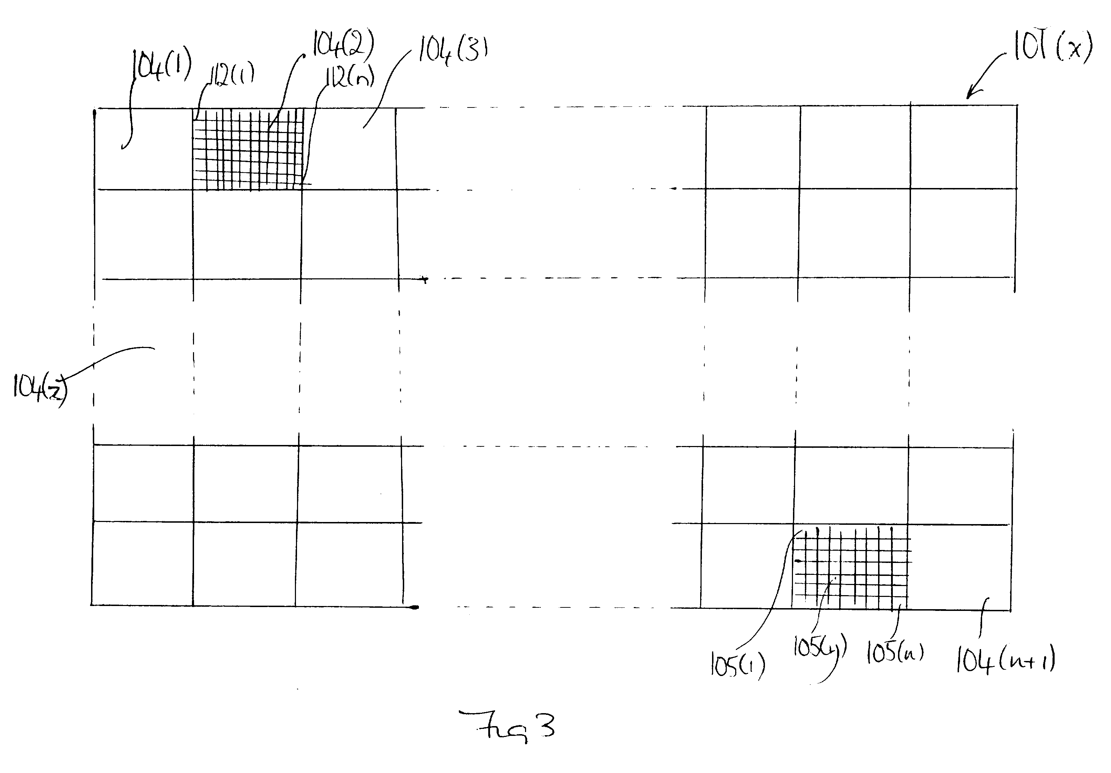

Figure 3 is a schematic representation of any - apart from the final one - optical cartridge of the series of optical cartridges used to copy data from the computer as used in the data collection system;

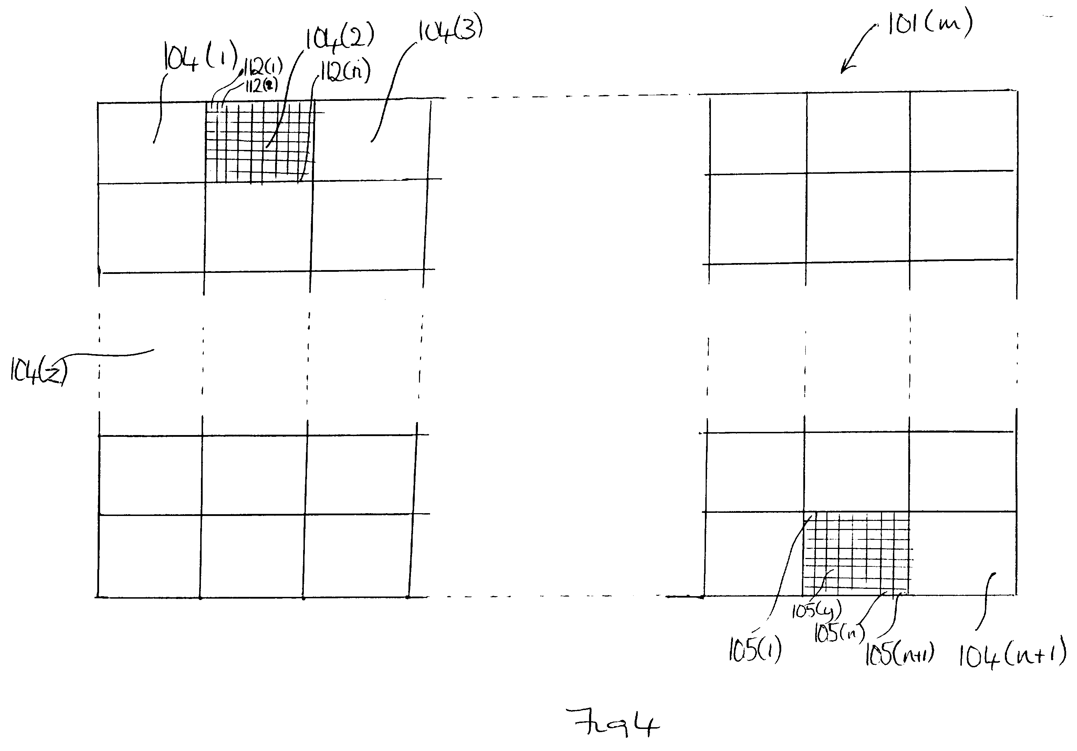

Figure 4 is a schematic representation of the final optical cartridge of the series of optical cartridges used to copy data from the computer; and
Figures 5A to 5I are flow diagrams illustrating the operation of the data collection system.

A known computer 1, for example, a personal computer (PC), comprises a display 9, a keyboard 11, and a housing 10 which houses, amongst other things, a central processing unit (CPU) 2, memories 3, 4, 5, 6 and all the associated circuitry, as is well known to persons skilled in the art. As is also well known to persons skilled in the art, typically the CPU 2 is coupled to the associated memories 3, 4, 5, 6, and the CPU 2 processes the software and data stored in the memories 3, 4, 5, 6 to operate the computer so as to perform its required tasks. Typically, the memories 3, 4, 5, 6 may comprise a hard disk 3, one or more Random Access Memories (RAMs) 5, 6, including CMOS memory 5 used, for example, to store semi-permanent data, and one or more Read Only Memories (ROMs) 4, used for example, to store essential code such as the Basic Input Output System (BIOS). The number and types of memories included will depend upon the functions and requirements of the computer. Associated with the hard disk 3 is a disk drive 12, and a controller 13 for controlling the operation of the hard disk drive 12. All of this is well known to persons skilled in the art, and as such need not be described in any further detail herein, except as is relevant to the present invention.

A data collection system 100 is used to copy data from the computer 1 - and in particular from the hard disk 3 - to an optical cartridge 101, the optical cartridge 101 being subject to subsequent analysis to determine the data stored in the computer memories.

When it is necessary to analyse the stored data, for example during a criminal investigation, then the data collection system 100 is coupled to the computer 1 through a printer port 7 of the computer 1, and an optical cartridge 101 is inserted into an optical drive 102 provided in the data collection system 100. The optical cartridge 1 is a rewritable media using phase-change or magneto-optical methods, for example such as those produced by National Panasonic (LF7300) or Plasmon (DW260). However, other rewritable media which allow for error detection and correction during the write cycle - as is possible using optical cartridges - may be used. The data copied from the computer 1 is copied onto one or more optical cartridges 101(x), where x=1 to m, and where m is the number of optical cartridges 101 in a series of optical cartridges used to copy all of the data required from the computer 1. To make a copy of the stored data, a master floppy disk 106 storing software used to operate the data collection system 100 is inserted into a floppy disk drive 8 on the computer 1, and the computer 1 is switched on. The computer 1 boots from the master floppy disk 106 and the software loads, establishing communication with the optical drive 102 and issuing a series of diagnostic tests to ensure that the hard disk drive 12 and controller 13 are functioning normally. The controller 13 and drive 12 are interrogated to find out how many drives there are, and their geometry. Direct access points for BIOS access is determined and linked to. If there is more than one drive, then the operator can select which drive is to be copied. The optical drive 102 is also checked for correct operation. A random generator - needed in the hash value generation process described below - is seeded at this point. Reference information is then input by the operator using the computer keyboard 11, such as operator identification, exhibit reference, the real date and time, and any other information required. Finally a password is entered - preferably, between 8 and 16 characters in length. All of this reference data is stored, ultimately, in a reference data storage block 104(1) in each optical cartridge 101(x) in the series of optical cartridges 101(1).....(m), but before that, is stored in a reference data buffer 120 in RAM 6 which is maintained throughout the copying process. The password is encrypted using an encryption process as described below before being stored in the reference data buffer 120. Because it is encrypted, the password does not appear on any cartridge 101(x) or floppy disks 110 used for storing authentication and integrity data and also described in more detail below. If authentication is required, then the password can be decrypted.

Once this initial set up procedure has been completed, then the copying procedure can begin.

As mentioned above, each cartridge 101(x) contains certain copy specific reference data such as drive serial number, cartridge sequence number, exhibit details and reference comments, operator name and the real date and time as stored during the set up procedure. The remainder of each cartridge 101(x), which is the bulk of the available memory space, contains the data copied from the computer 1. This reference data is actually copied to the cartridge 101(x) as outlined later. Each cartridge 101(x) is divided into several blocks 104(1)...104(n), where n is the number of blocks, of arbitrarily chosen size. One block 104(1) stores the reference data mentioned above, the other blocks 104(2)......(n) store integrity verification and authentication information, data from CMOS memory 5, higher conventional ROM memory 4 and data from the hard disk 3. Each block 104(5).....104(n-1) that stores data from the hard disk 3 stores a number of sectors 111 of data from the hard disk 3, a sector 111 of data being defined as an addressable 'chunk' of data stored on the hard disk 3, and conventionally of 512 bytes in size in a typical PC. A final block 104(n+1) is used to store relocated data as required. The size and number of the blocks 104(z), where z = 1 to n+1, will depend on the amount of data being copied from the computer 1, and the capacity of the cartridge 101(x). Since any changes to the stored data can only be narrowed down to a particular block, ideally the block size should be kept as small as possible.

During the copying process, firstly 128 bytes of CMOS data - i.e. that semi-permanent data such as clock and machine configuration data retained when the computer 1 is switched off and which is stored in the CMOS memory 5 is copied into one block 104(3) on the first cartridge 101(1). The next block 104(4) to be copied comprises data stored in conventional ROM memory 4 from C000:0000 to F000:FFFF. This higher memory is copied because it is this which contains the permanently stored data in the ROMs - including the BIOS ROM which provides the lowest level of system functionality. This data is copied because there may be plug-in hardware that has evidential implications or may be vital to some software application stored on the hard disk 3. Finally, the data stored on the hard disk 3 is copied onto the cartridge 101. The data from the hard disk 3 is copied in sequence into a number of blocks 104(5).......104(n-1), each block 104 containing a number of sectors of data as discussed above. As mentioned above, the number and size of each block 104(1).....(n) depends on the amount of data to be copied and the size of the optical cartridge 101. Data is copied from the memories 3, 4, 5 by reading data, in blocks, into a first main work buffer 121 in RAM 6 in the computer 1 and then reading the contents of the first main work buffer 121 to the optical media, i.e. the optical cartridge 101.

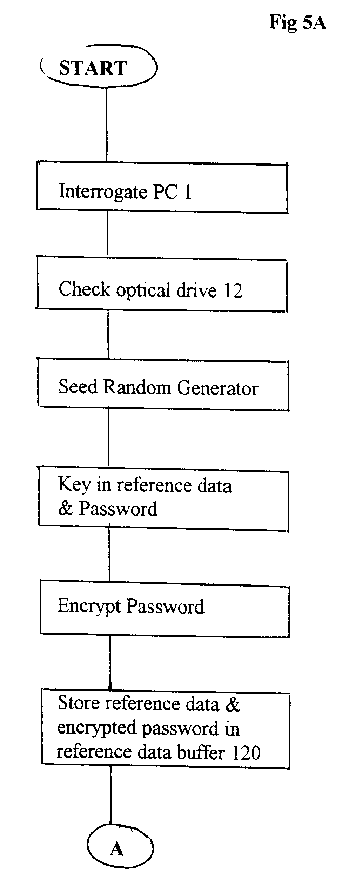

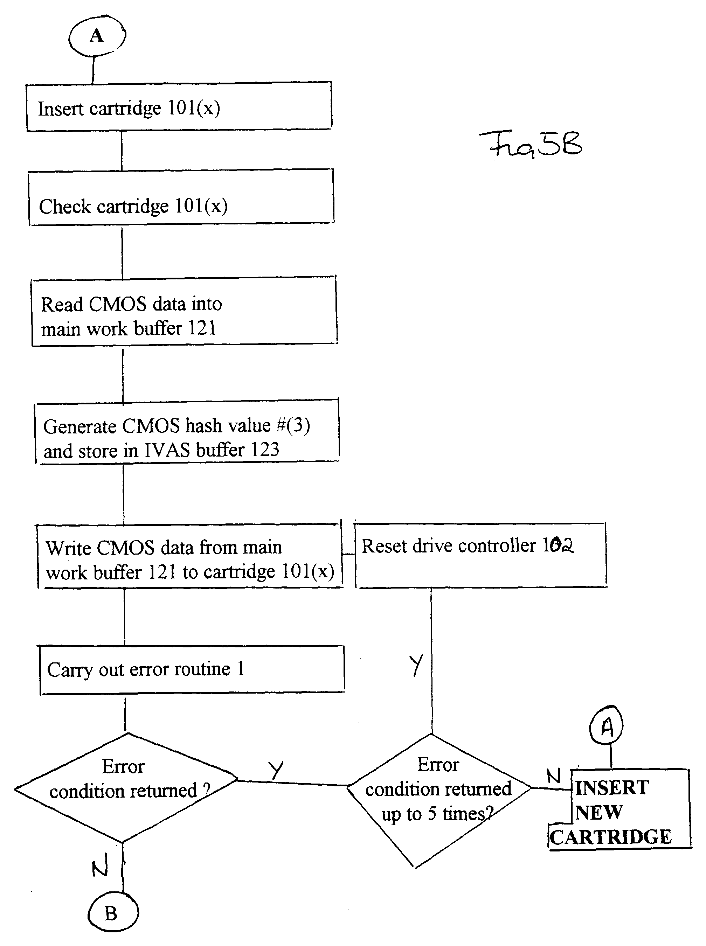

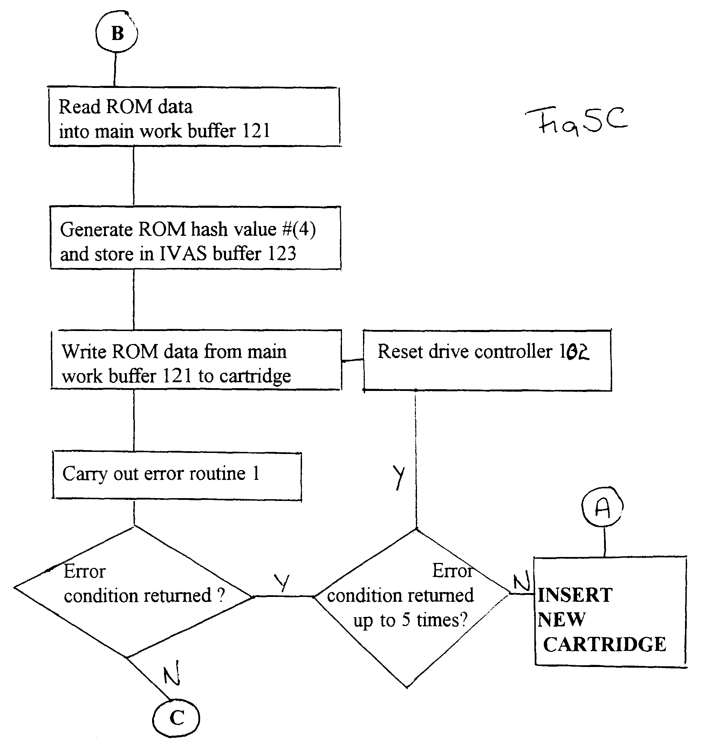

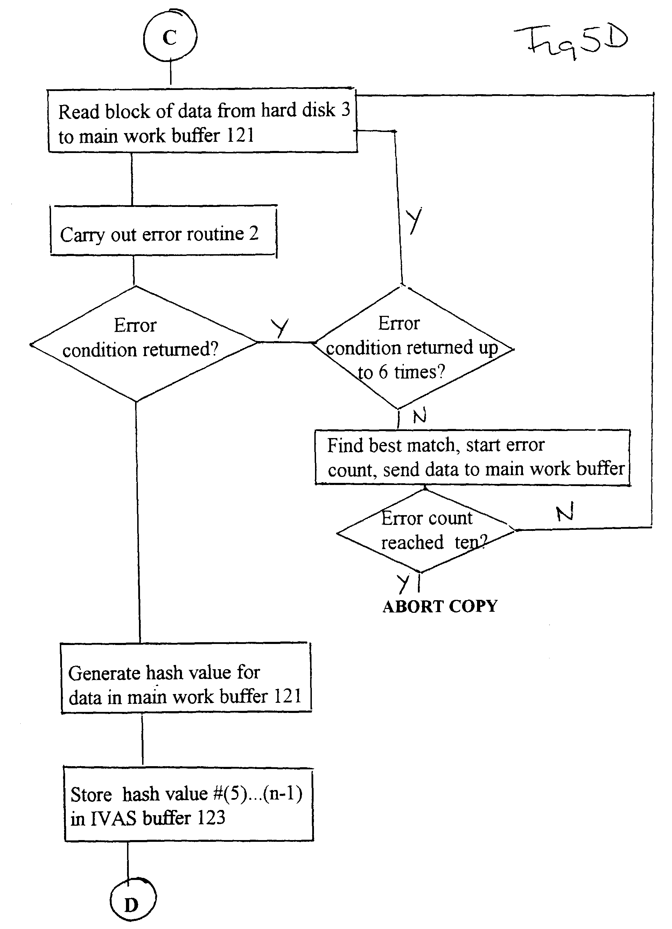

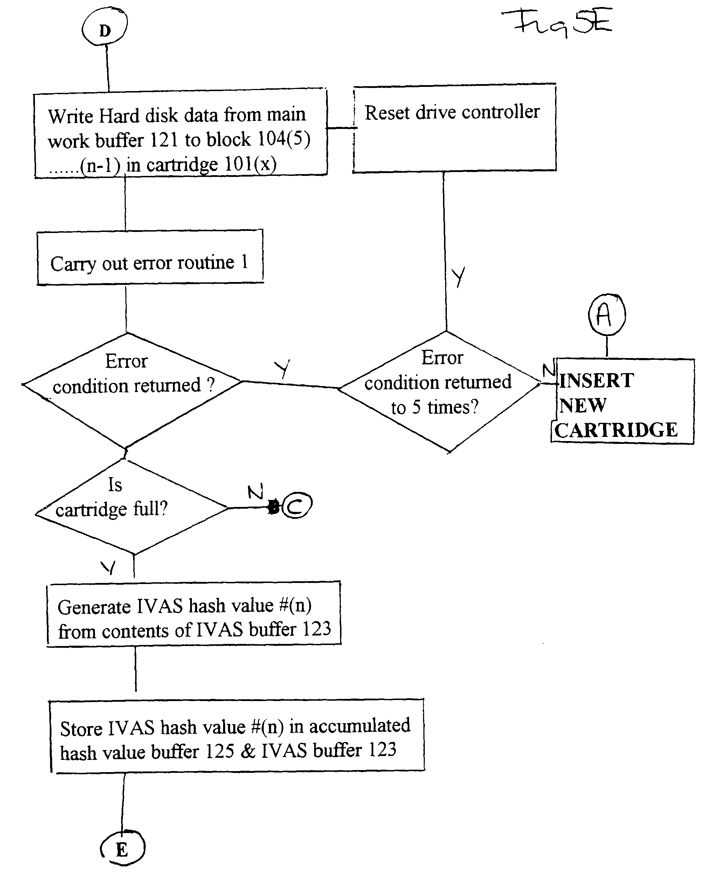

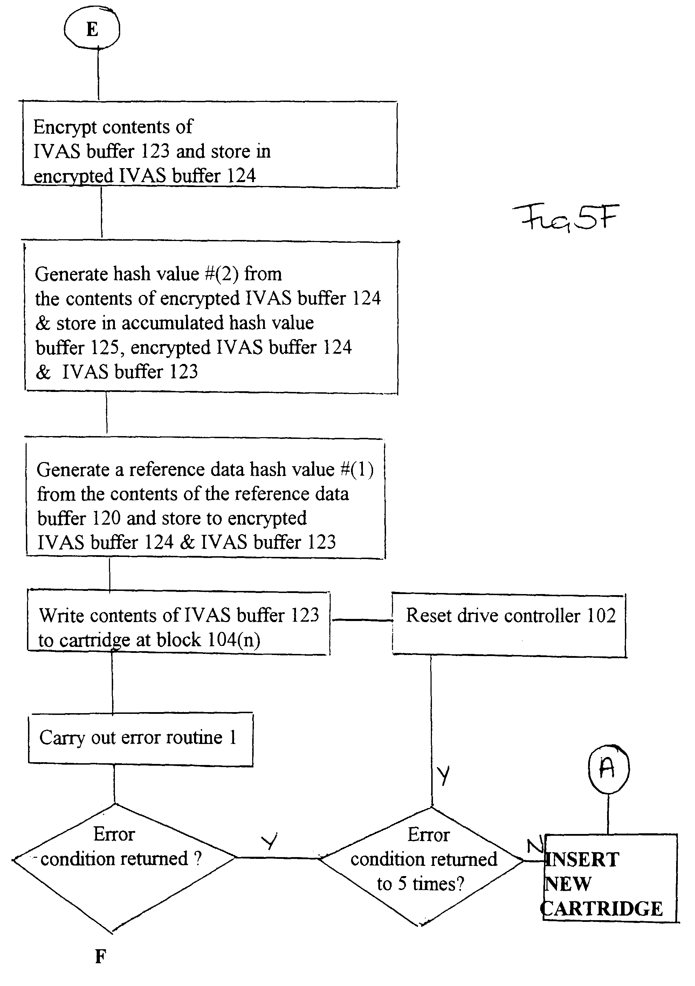

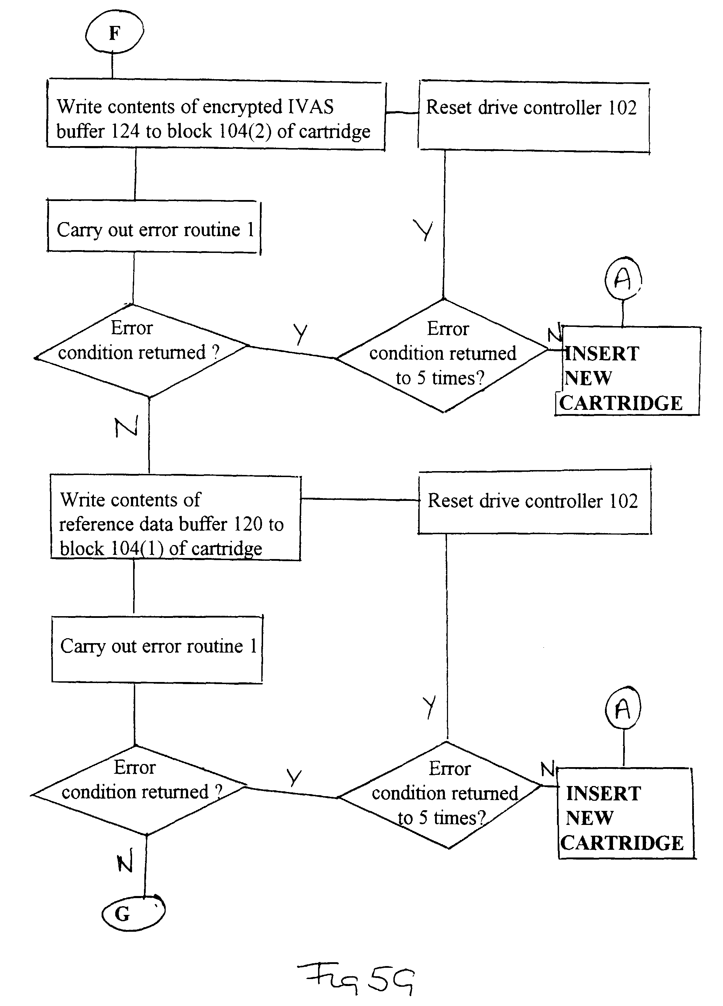

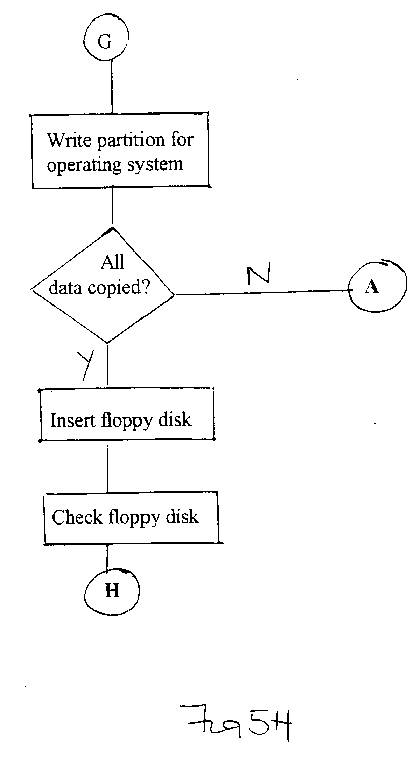

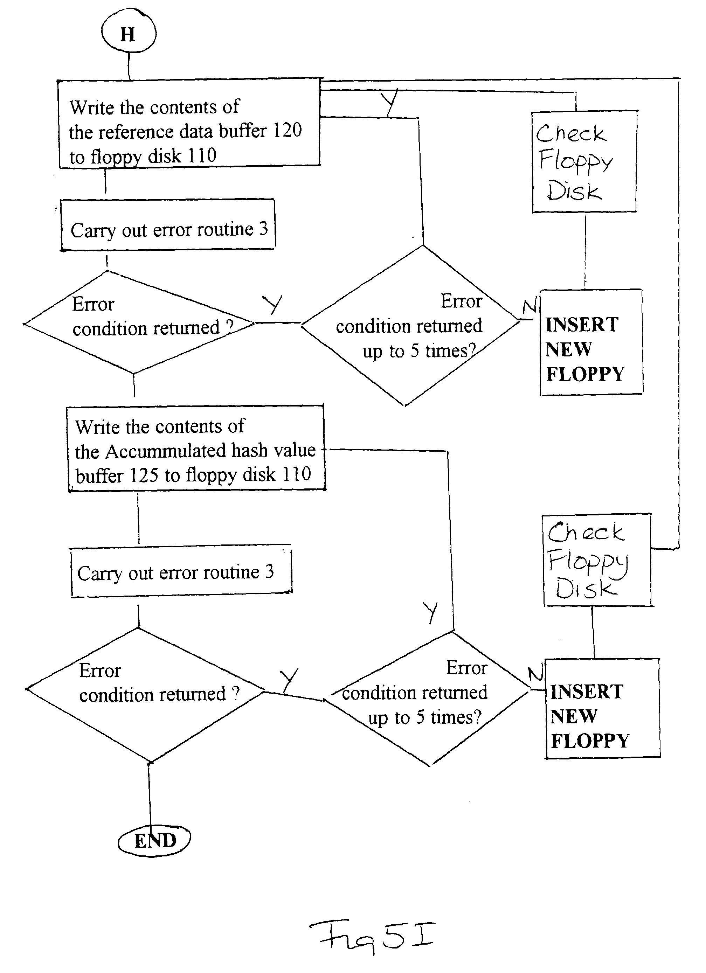

For data copied from the hard disk 3, it is important that the correctness of the copied data be checked, and to this end, when each block of data is stored in the first main work buffer 121, before it is written to the optical cartridge 101(x), a verify sequence then reads the data from the hard disk 3 to a second main work buffer 122 - also comprising storage area in RAM 6 - and compares the contents of this second buffer 122 against the original data stored in the main work buffer 121. This process - referred to as error routine 2 in Figures 5A to 5I - confirms that the data collected from the hard disk 3 has been correctly copied to the first main work buffer 121. If there is a discrepancy, the data is read again, up to six times. If the error persists, a best match is performed, an error count is started and the data passed for storage. In addition, a bit is set within a mapping area within the reference data buffer 120. If the error count reaches ten, then the whole copy process is aborted. This error routine is carried out every time data is read from the hard disk 3.

Similarly, there is another error routine - referred to as error routine 1 - which is carried out whenever data is copied to the optical cartridge 101(x). In this case, the fact that data has been received and stored correctly is confirmed. Data that cannot be stored in the correct location can be relocated to a special block 104(n+1), set aside for this purpose. If an error condition is returned, the drive controller 102 is reset, and the information rewritten up to five times. If the error persists, the operator is invited to insert a new cartridge, and copying can begin again.

While data from the memories 3, 4, 5 is still stored in the first main work buffer 121, but after it has been verified where appropriate, then a hash value #(3)....(n-1) for that data is generated such that a single bit change anywhere within that block of data would produce a different hash value. Ultimately, these hash values #(3).....(n-1) are stored in an appropriate storage area in a separate block in the optical cartridge 101(1) - namely the Integrity Verification and Authentication Store (IVAS) block 104(n). This is discussed in further detail below.

In addition, during the copying process a hash value #(1) is generated for the data which will be stored in the first block 104(1), that is the reference data storage block.

A hash value is not generated for the block 104(n+1) used to store relocated data.

As is known to persons skilled in the art, a hash value is a fixed length value generated using a hash function from an input data string, usually of longer length. The hash function is such that, the generated hash value will be - almost - unique for that input string. Theoretically, there will be more than one input string that could generate the same hash value. However, in practice it would require a large number of operations to generate another input string that would generate the same hash value - for example, a 64-bit hash value will require 264 trials to find another input string that will generate the same hash value. This is in practice not achievable, so it can be assumed that a generated hash value provides a 'fingerprint' for the input string.

The hash value #(1)....(n) is generated using the following procedure:

The contents of the main work buffer 121 i.e. the data to be written to a particular block 104(x), are XOR'd word by word with the output of a pseudo-random number generator seeded by three primes, three constants, and three variables. Thus the starting seed is effectively 72 bits long of which 24 bits are transient.

The generator may be for example, an adaptation of code described by Jeff Prosise in the October 1993 issue of Microsoft Systems Journal Extra. To generate the hash value, a variant of the Davies-Mayer scheme described in 'Applied Cryptography' by Bruce Schneier, published by John Wiley & Sons Inc. (ISBN 0-471-59765-2) at pages 338 to 339, is used to generate a 64-bit hash value. This 64-bit hash is XOR'd and concatenated with the 64-bit hash value generated from the previous block to form a 128-bit value which is stored in an IVAS buffer 123 in RAM 6 and which will eventually become the contents of the IVAS block 104(n) as described below. The contents of the IVAS block 104(n) are themselves hashed using the same procedure. In the case of the first hash value, the 64-bit value is concatenated with a 64-bit value generated by the pseudo-random number generator. The use of a random number generator in the hash generation process does not allow a cryptanalytical approach to breaking encryption based on a knowledge of the general data layout.

By generating this 128-bit hash value and storing this value it is decreasing the likelihood that someone would be able to corrupt the copied data without giving rise to a change in the generated hash values.

These hash values #(3) ....(n-1), as they are generated, are stored in the IVAS buffer 123 at appropriate locations. The hash values #(3)....(n-1) are kept in the IVAS buffer 123 until all the data has been written to the appropriate blocks 104(3)......(n-1) in the optical cartridge 101(1).

Once all the memory data has been copied to the optical cartridge 101(1), then another hash value - known as the IVAS block hash value #(n) - is generated from all the other hash values #(3)....(n-1) stored in the IVAS buffer 123 using the same hash value generation method described above. This IVAS block hash value #(n) is stored in an accumulated hash value buffer 125, and also in the IVAS buffer 123 itself. The contents of the IVAS buffer 123 are then encrypted and stored in an encrypted IVAS buffer 124. From the contents of the encrypted IVAS buffer 124 an encrypted IVAS hash value #(2) is then generated, this encrypted IVAS hash value #(2) being stored in the accumulated hash value buffer 125 the encrypted IVAS buffer 124, and the IVAS buffer 123.

The final hash value to be generated is the reference data hash value #(1) generated from the contents of the reference data buffer 120. This hash value #(1) is also stored in the encrypted IVAS buffer 124 and in the IVAS buffer 123.

Finally, the contents of the IVAS buffer 123, encrypted IVAS buffer 124, and the reference data buffer 120 are written - in that sequence - to the optical cartridge 101(1) to be stored as data in the IVAS block 104(n), the encrypted IVAS block 104(2) and the reference data block 104(1) respectively, the encrypted hash values being stored in the encrypted IVAS block 104(2) at individual storage areas. The reference data block 104(1) is left until last because it contains error mapping information which is incomplete until all the data has been copied.

The IVAS block 104(n) comprises a plurality of hash value storage areas 105(y), where y = 1 to n for cartridges 101(1) to 101(m-1). For the final cartridge 101(m), y = 1 to n+1. Each hash value storage location 105(y) stores a single hash value #(1).......#(n) for all but the last cartridge, and #(1).......#ACC for the final cartridge 101(m). This is discussed further below. The first hash value storage location 105(1) stores the first hash value #(1) generated from the reference data, the third hash value storage location 105(3) stores the hash value #(3) generated by the copied CMOS data block 104(3), and the fourth storing the hash value #(4) generated from the copied conventional memory data. The hash values #(5) to #(n-1) generated from the copied data from the hard disk 3 is located at corresponding storage locations 105(5) to 105(n-1). The IVAS block hash value #(n) is stored at storage location 105(n) and the encrypted IVAS hash value #(2) stored at storage location #(2).

The encrypted IVAS block 104(2) also has individual storage locations 112(1).....112(n) for storing individual encrypted hash values EN#(1) .....EN#(n).

Strictly speaking, the first two hash values EN#(1) and EN#(2) stored at locations 112(1) and 112(2) of the encrypted IVAS block 104(2) are not encrypted - having been stored at the final stages after encryption. If the encrypted IVAS block 104(2) needs to be decrypted, for authentication and verification, then the contents of these two storage locations 112(1) and 112(2) are collected before decryption, and ignored after decryption.

The encryption is done using the RSA algorithm described in the book by Bruce Scheier at page 238 et seq. This algorithm is a public-key encryption algorithm, which uses what is known as a public-key for encryption. What is known as a private-key is used for the decryption. In practice, the RSA algorithm uses two public keys and one private key. In the present invention, the primary public key P1 is the product of two primes, p and q. The secondary public key P2 is relatively prime to (p-1) x (q-1), and the private key E is calculated as E = P2-1 (mod(p-1) x (q-1)). The 128-bit hash value is encrypted byte wise by Hc = HpP2 (mod P1), and subsequent decryption can be achieved by Hp = HcE (mod P1), where H is the sequential transient byte from the hash value, and the suffixes 'c' and 'p' relate to cryptext and plain text respectively. For extra security the private key is kept in secure storage separate from the public keys, which are embedded in the software on the master floppy disk 106. Copying can then proceed to the next cartridge 101 (2), and so on, until the final cartridge 101(m) is complete.

By generating a plain IVAS hash value #(n) and an encrypted hash value #(2) this enables the integrity of each floppy disk 110 and the optical cartridge copy. If any floppy disk 110 is altered, it will not match the other floppy or the cartridge 101. If the cartridge 101 is altered the data will not match the floppy disks 110.

The final cartridge 101(m) will contain similar information to the others in the series, and in addition will have the accumulated IVAS hash value #ACC generated from all the other IVAS hash values from the other cartridges, including the last cartridge 101(m). This accumulated hash value #ACC is then stored in the IVAS block 104(n) of the final cartridge 101(m) at storage area 105(n+1) provided in the final cartridge 101(m) for this purpose.

For each cartridge the block contents are as follows (from low to high):
(a) Reference information - in a single block 104(1);
(b) encrypted IVAS - in single block 104(2);
(c) CMOS data - in a single block 104(3);
(d) conventional memory data - in a single block 104(4);
(e) data from the hard disk 3 - in a number of blocks 104(5).....104(n-1), copied in sequence;
(f) IVAS - in a single block 104(n); and
(g) relocated data - in a single block 104(n+1).

CMOS and ROM data appears on all the cartridges, because they provide additional confirmation that all the copy sections came from the same computer and also, since the CMOS value changes as time passes, evidence of the length of time taken to complete a copy is available as well as if there is any delay between copying cartridges.

No hash value is generated for the relocated data block 104(n+1).

The blocks are actually copied in the following chronological order:
(1) CMOS data;
(2) conventional memory data;
(3) data from the hard disk 3;
(4) IVAS
(5) encrypted IVAS; and
(6) reference data.

Of course, the relocated data is copied as when the need for data to be relocated occurs.

Once the final cartridge has been copied, then the master floppy disk 106 is removed from the computer floppy disk drive and a blank floppy disk 110 is inserted, the disk read and checked to ensure that it is formatted, and the contents of the accumulated hash value buffer 125 and the reference data buffer 120 are copied thereon. A third error routine confirms that the information is correctly written onto the floppy disc. If an error condition is returned, the floppy disk controller is reset and the data rewritten up to 5 times. If the error persists then the operator is informed and asked to insert a new floppy disk. More than one copy of the floppy disk 110 can be made, and preferably at least two are made, particularly when the invention is applied to the field of computer forensics, in which one copy would be kept by the investigator, and one by the owner of the computer under investigation.

If it is required to access the data using standard operating systems, such as for example MSDOS, a small section of the optical cartridge 101(x) - for example the first 5 megabytes - can be set aside as a correctly formatted partition for that operating system, and to put a copy of the reference data, CMOS data, conventional memory and IVAS block, as well as a plain text file containing some reference details. In this case, for a 2.6Gbyte optical cartridge, we would have approximately 5Mbytes containing standard operating system data described above, approximately 1,275 Mbytes containing all the copied data described in the main body of the specification, and approximately 20 Mbytes of relocated information. This data is written at the end of the cartridge after the contents of the reference data buffer 120 have been written to the reference data block 104(1) of the optical cartridge 101(x).

The private key used in the hash generation is kept separate from the public keys, which are embedded in the software on the master floppy disk 106. A range of matching public/private key values can be generated to provide compartmentalised security on, say, a country by country basis. This would prevent a breach of security in one country from compromising evidence gathered by a similar system elsewhere.

As will be understood by persons skilled in the art, various modifications are possible within the scope of the present invention. For example, other rewritable media can be used to take the copies of the data from the PC. Other suitable hash value generation systems can be used as well as other encryption techniques. The layout of the cartridge is variable - individual blocks can be stored at any location in the cartridge. While the present invention is particularly applicable to computer forensics, the system of the present invention can have other applications where copies of computer data are made. Other data from other memories can be copied as required to ensure that correct data is available for analysis.

## Claims

1. A system for copying data from a computer comprising a processing means and at least one memory means associated therewith, the system comprising:
memory means for storing the copied data thereon;
means for copying the data to the system memory means in sequences of data blocks;
means for generating a numerical value for each block of data to be stored in the system memory means, the value being dependant upon, and substantially unique to, the block of data, such that any bit change in the stored data would result in a different numerical value; and
means for storing each generated numerical value in a portion of the system memory means.

2. A system as claimed in claim 1, further comprising means for encrypting the generated numerical values prior to storage in the system storage means, and means for generating a further numerical value from the encrypted generated numerical values, the encrypted numerical value being stored in a portion of the system storage means.

3. A system according to claim 1 or claim 2, further comprising means for generating, when all the data has been copied, or when the system memory means is full, a further numerical value from the generated numerical values, and storing the further numerical value in a portion of the system memory means.

4. A system according to any of claims 1 to 3, wherein reference data is stored in the system memory means, the system further comprising means for generating a substantially unique numerical value from the reference data, the reference data numerical number being stored in a portion of the system memory means.

5. A system according to any preceding claim, wherein where the amount of data to be copied from the computer is greater than the available space in the second memory means, further data is copied to additional system memory means, the data being copied in further blocks of data, with reference data being copied to the additional memory means, and numerical values being generated for the reference data and copied data, the system further comprising means for generating an accumulated numerical value from all the numerical values generated in all the system memory means.

6. A system according to claim 5, wherein some of the data copied to the additional system memory means is the same as that copied to the system memory means.

7. A system according to claim 6, wherein the data copied to both the system memory means, and the additional system memory means is copied from Read Only Memories and Random Access Memories of the computer.

8. A system according to any preceding claims, further comprising means for copying the generated numerical values to an additional storage medium.

9. A system according to claim 8, wherein the additional storage medium is a floppy disk.

10. A system according to any preceding claim, wherein the numerical values are 128-bit hash values.

11. A method of copying data from a computer comprising a processing means and at least one memory means associated therewith, the method comprising the steps of:
copying the data to system memory means in sequences of data blocks;
generating a numerical value for each copied block of data the value being dependant upon, and substantially unique to, the block of data, such that any bit change in the stored data would result in a different numerical value;
storing the copied data in a system memory means; and
storing each generated numerical value in a portion of the system memory means.

12. A method as claimed in claim 10, further comprising the steps of encrypting the generated numerical values prior to storage in the system storage means, and generating a further numerical value from the encrypted generated numerical values, the encrypted numerical value being stored in a portion of the system storage means.

13. A method according to claim 11 or claim 12, further comprising the steps of generating, when all the data has been copied, or when the system memory means is full, a further numerical value from the generated numerical values, and storing the further numerical value in a portion of the system memory means.

14. A method according to any of claims 11 to 13, further comprising the steps of storing reference data in the system memory means, generating a substantially unique numerical value from the reference data, and storing the reference data and the reference data numerical number in a portion of the system memory means.

15. A method according to any of claims 11 to 14, where the amount of data to be copied from the computer is greater than the available space in the second memory means, the method comprising the further steps of copying further data to additional system memory means in further blocks of data, with reference data also being copied to the additional memory means, generating numerical values for the reference data and copied further data, and further generating an accumulated numerical value from all the numerical values generated in all the system memory means.

16. A method according to claim 15, wherein some of the data copied to the additional system memory means is the same as that copied to the system memory means.

17. A method according to any of claims 11 to 16, wherein the generated numerical values are copied to an additional storage medium.

18. A method according to claim 17, wherein the additional storage medium is a floppy disk.

19. A method according to any of claims 11 to 18, wherein the numerical values are 128-bit hash values.

20. A method according to any of claims 11 to 19, wherein the copied data is verified before storage in the system memory means.
